(19) Europäisches Patentamt / European Patent Office / Office européen des brevets

(11) **EP 2 447 511 B1**

(12) **EUROPÄISCHE PATENTSCHRIFT**

(45) Veröffentlichungstag und Bekanntmachung des Hinweises auf die Patenterteilung:
**28.03.2018 Patentblatt 2018/13**

(51) Int Cl.:
**F02C 9/28** (2006.01)

(21) Anmeldenummer: **11185639.9**

(22) Anmeldetag: **18.10.2011**

(54) **Verfahren zum Reglen einer Gasturbine sowie Gasturbine zur Durchführung des Verfahrens**

Method for controlling a gas turbine and gas turbine for implementing the method

Procédé de réglage d'une turbine à gaz et turbine à gaz destinée à l'exécution du procédé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.10.2010 CH 17862010**

(43) Veröffentlichungstag der Anmeldung:
**02.05.2012 Patentblatt 2012/18**

(73) Patentinhaber: **Ansaldo Energia Switzerland AG**
**5401 Baden (CH)**

(72) Erfinder: **Fuchs, Herbert**
**5415 Nussbaumen (CH)**

(74) Vertreter: **Bernotti, Andrea et al**
**Studio Torta S.p.A.**
**Via Viotti, 9**
**10121 Torino (IT)**

(56) Entgegenhaltungen:
**EP-A1- 0 890 888       EP-A1- 1 602 904**
**WO-A1-2007/045528      US-A- 4 744 670**
**US-A1- 2009 222 187**

**Beschreibung**

TECHNISCHES GEBIET

Die vorliegende Erfindung bezieht sich auf das Gebiet der Gasturbinen. Sie betrifft ein Verfahren zum Regeln einer Gasturbine gemäss dem Oberbegriff des Anspruchs 1. Sie betrifft weiterhin eine Gasturbine zu Durchführung des Verfahrens.

STAND DER TECHNIK

Im aktuellen Stand der Technik wird die Brennstoffmenge einer Gasturbine dadurch geregelt, dass die Heissgastemperatur (Turbineneinlasstemperatur TIT) in der Maschinensteuerung mithilfe einer mathematischen Näherung berechnet wird, die als Eingangsgrössen die an der Maschine gemessene Turbinenauslasstemperatur (TAT) und/oder den Auslass-Druck des Verdichters benötigt (siehe zum Beispiel die Druckschrift EP 890 888 A1).

Insbesondere in transienten Betriebszuständen, zum Beispiel bei plötzlichen Lastwechseln, kann ein derartiger Regelungsmechanismus zu einem gefährlichen Überschwingen der Heissgastemperatur führen, weil das Turbinenauslasstemperatur-Signal zeitverzögert ist.

Aus der WO2007/045528 ist ein Verfahren bekannt, bei der der Druck vor der Turbinenstufe gemessen wird, damit eine zeitliche Änderung des gemessenen Drucks, der so genannte Druckgradient, ermittelt wird. Dieser Druckgradient oder eine vom Druckgradienten abgeleitete Größe wird mit dem wenigstens einen Schwellwert verglichen und bei Überschreiten oder Unterschreiten des Schwellwertes ein Signal zum Schutz der Gasturbinenanlage generiert.

Die EP0890888 beschreibt ein Verfahren zum Regeln einer Gasturbine, wobei die Regelung auf der Bestimmung der Heissgastemperatur basiert. Dabei wird die Heissgastemperatur nicht direkt gemessen, sondern aus der Turbinenauslasstemperatur und dem Druck am Kompressorauslass bestimmt. Da die entsprechenden Messsensoren ein unterschiedliches dynamisches Verhalten aufweisen, basiert das Verfahren der EP0890888 auch darauf, das dynamische Verhalten mittels Korrekturmitteln auszugleichen.

Aus der EP1602904 ist ein Verfahren bekannt, bei welchem die Temperatur innerhalb eines Brenners einer Gasturbine indirekt, über die Bestimmung der Frequenz einer innerhalb des Brenners auftretenden transversalen Schwingungen, ermittelt wird.

DARSTELLUNG DER ERFINDUNG

Es ist daher eine Aufgabe der Erfindung, ein Verfahren zum Regeln einer Gasturbine zu schaffen, welches die Nachteile bekannter Verfahren vermeidet und sich dadurch auszeichnet, dass mit vergleichsweise geringem Aufwand eine sichere Beherrschung insbesondere von transienten Zuständen der Maschine erreicht wird, sowie eine Gasturbine zu Durchführung des Verfahrens anzugeben.

Die Aufgabe wird durch die Gesamtheit der Merkmale der Ansprüche 1 und 9 gelöst. Das erfindungsgemässe Verfahren geht aus von einer Gasturbine, welche einen Verdichter zum Verdichten von angesaugter Verbrennungsluft, eine Brennkammer zum Erzeugen von Heissgas durch Verbrennen eines Brennstoffs mittels der verdichteten Verbrennungsluft, sowie eine mehrstufige Turbine zum Entspannen des erzeugten Heissgases unter Arbeitsleistung umfasst, wobei die Regelung nach Massgabe der Heissgastemperatur erfolgt, welche aus mehreren anderen gemessenen Betriebsgrössen der Gasturbine abgeleitet wird. Das erfindungsgemässe Verfahren zeichnet sich dadurch aus, dass eine Ableitung oder näherungsweise mathematische Bestimmung der Heissgastemperatur ausschliesslich mit Druckmessungen an verschiedenen Stellen der Gasturbine gebildet wird.

Erfindungsgemäß werden die Druckmessungen im in der Brennkammer erzeugten Heissgasstrom durchgeführt und sie umfassen eine Druckverlust-Messung im Hauptstrom der Gasturbine.

Besonders vorteilhaft ist es, wenn die Messpositionen, zwischen denen der Druckverlust bestimmt wird, stromabwärts der in der Brennkammer der Gasturbine befindlichen Flammen liegen.

Dabei können die Messpositionen, zwischen denen der Druckverlust bestimmt wird, ausschliesslich in der Brennkammer liegen.

Es ist aber auch denkbar, dass in der Gasturbine am Übergang zwischen Brennkammer und Turbine ein Turbinenflansch angeordnet ist, und dass die Messpositionen, zwischen denen der Druckverlust bestimmt wird, ausschliesslich im Turbinenflansch liegen.

Ebenso ist es möglich, dass in der Gasturbine am Übergang zwischen Brennkammer und Turbine ein Turbinenflansch angeordnet ist, und dass die Messpositionen, zwischen denen der Druckverlust bestimmt wird, sowohl in der Brennkammer als auch im Turbinenflansch liegen.

Eine andere Ausgestaltung zeichnet sich dadurch aus, dass zusätzlich zur Druckverlust-Messung der Druck unmittelbar vor der ersten Schaufelreihe der Turbine gemessen wird.

Besonders günstig ist es, wenn die Heissgastemperatur aus der Druckverlust-Messung und der Druckmessung unmittelbar vor der ersten Schaufelreihe der Turbine nach Massgabe der Formel

$$T = const^{**}(n) \cdot \left(\frac{p}{\Delta p}\right)^2 \cdot \left(\frac{p \cdot p_{amb_0}}{p_0 \cdot p_{amb}}\right)^{\frac{1,31-1}{1,31}} = F(p, \Delta p)$$

abgeleitet wird, wobei n die Drehzahl, $p_{amb}$ der Umgebungsdruck und po der Druck vor der Turbine und $p_{amb0}$ der zugehörige Umgebungsdruck, beide am nominellen Punkt, sind.

Es ist aber auch vorteilhaft, wenn bei den Druckmessungen durch zeitliche Mittelung oder Filterung allfällige von Brennkammer-Pulsationen herrührende Pulsationssignale unterdrückt werden.

Die erfindungsgemässe Gasturbine zur Durchführung des Verfahrens umfasst einen Verdichter zum Verdichten von angesaugter Verbrennungsluft, eine Brennkammer zum Erzeugen von Heissgas durch Verbrennen eines Brennstoffs mittels der verdichteten Verbrennungsluft, sowie eine mehrstufige Turbine zum Entspannen des erzeugten Heissgases unter Arbeitsleistung. Die Gasturbine ist dadurch gekennzeichnet, dass im Bereich des in der Brennkammer erzeugten Heissgasstroms in Strömungsrichtung hintereinander zwei Druckaufnehmer zur Messung des Druckverlustes im Heissgasstrom angeordnet sind, welche Druckaufnehmer an eine Maschinensteuerung der Gasturbine angeschlossen sind.

Eine Ausgestaltung der erfindungsgemässen Gasturbine ist dadurch gekennzeichnet, dass die beiden Druckaufnehmer im Bereich der Brennkammer angeordnet sind.

Eine andere Ausgestaltung zeichnet sich dadurch aus, dass in der Gasturbine am Übergang zwischen Brennkammer und Turbine ein Turbinenflansch angeordnet ist, und dass wenigstens einer der Druckaufnehmer im Bereich des Turbinenflansches angeordnet ist.

Insbesondere können die beiden Druckaufnehmer im Bereich des Turbinenflansches angeordnet sein.

Besonders günstig ist es, wenn gemäss einer anderen Ausgestaltung ein dritter Druckaufnehmer unmittelbar vor der ersten Schaufelreihe der Turbine angeordnet und an die Maschinensteuerung der Gasturbine angeschlossen ist.

Eine noch andere Ausgestaltung ist dadurch gekennzeichnet, dass die Druckaufnehmer über eine Vorrichtung zur Unterdrückung von Pulsationssignalen an die Maschinensteuerung der Gasturbine angeschlossen sind.

Alle erläuterten Vorteile sind nicht nur in den jeweils angegebenen Kombinationen, sondern auch in anderen Kombinationen oder Alleinstellung verwendbar, ohne den Rahmen der Erfindung zu verlassen. Weiter kann beispielsweise zur Regelung der Gasturbine eine Kombination von Ableitungen der Heissgastemperatur verwendet werden, wobei mindestens ein Ableitung mit Hilfe der Druckmessungen gebildet wird. Eine zweite Ableitung kann beispielsweise, wie in der EP 890 888 A1 beschrieben, gebildet werden. Beide Ableitungen werden in geeigneter weise miteinander kombiniert. Beispielsweise führt die zweite Ableitung (Näherung) im stationären Betrieb und die vorgeschlagene neue Ableitung führt während des transienten Betriebes.

KURZE ERLÄUTERUNG DER FIGUREN

Die Erfindung soll nachfolgend anhand von Ausführungsbeispielen im Zusammenhang mit der Zeichnung näher erläutert werden. Es zeigt

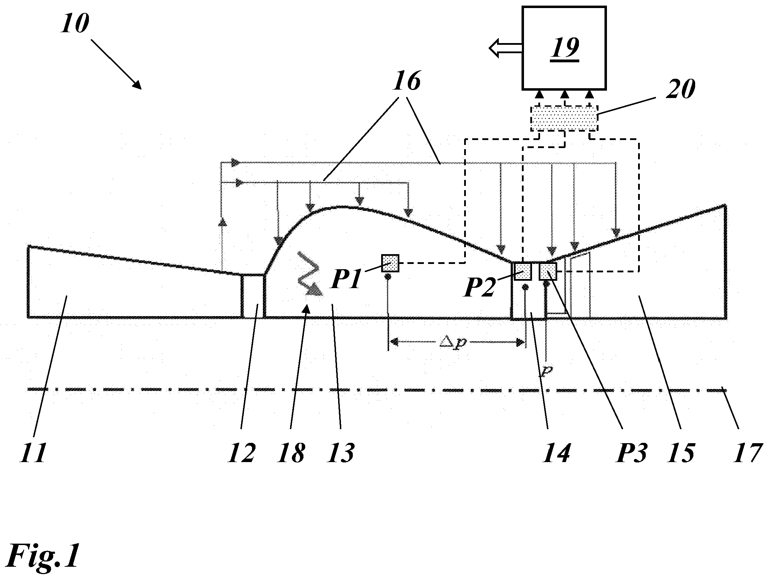

Fig. 1     das stark vereinfachte Schema einer Gasturbine mit dem darin eingezeichneten Messgrössen gemäss einem Ausführungsbeispiel der Erfindung.

WEGE ZUR AUSFÜHRUNG DER ERFINDUNG

In Fig. 1 ist in einem stark vereinfachten Schema eine Gasturbine 10 dargestellt, wie sie zur Durchführung des erfindungsgemässen Verfahrens geeignet ist. Die Gasturbine 10 umfasst in axialer Anordnung entlang einer Achse 17 einen Verdichter 11 zum Verdichten von angesaugter Verbrennungsluft, eine Brennkammer 13, in der ein Brennstoff unter Einsatz der verdichteten Verbrennungsluft mit einer Flamme 18 verbrannt wird und dabei ein Heissgas erzeugt, dass aus der Brennkammer 13 heraus durch eine nachfolgende, mehrstufige Turbine 15 strömt und dort unter Arbeitsleistung entspannt wird. Zwischen dem Verdichter 11 und der Brennkammer 13 ist ein Verdichterflansch 12 angeordnet. In gleicher Weise ist zwischen der Brennkammer 13 und der Turbine 15 ein Turbinenflansch 14 vorgesehen. Innerhalb der Turbine 15 sind eine erste Schaufelreihe (Leitschaufeln) und eine zweite Schaufelreihe (Laufschaufeln) eingezeichnet. Von dem Verdichter 11 wird im Rahmen einer Kühlung 16 verdichtete Luft abgezweigt und an verschiedenen Stellen in die Brennkammer 13 und die Turbine 15 eingespeist.

Zur Regelung der Gasturbine 10 ist eine Maschinensteuerung 19 vorgesehen, die aus der Gasturbine 10 verschiedene Messgrössen erhält und (in Fig. 1 durch den aus der Maschinensteuerung 19 herausgehenden Blockpfeil angedeutet) auf die (nicht dargestellte) Brennstoffversorgung der Gasturbine 10 einwirkt. Im Rahmen der Erfindung werden als Messgrössen ein Druckverlust Δp im Heissgasstrom nach der Flamme 18 und ein Druck p unmittelbar vor der ersten Schaufelreihe der Turbine 15 aufgenommen. Hierzu dienen entsprechende Druckaufnehmer P1, P2 und P3, die an die Maschinensteuerung 19 angeschlossen sind.

Um die aufgenommenen Drucksignale von störenden Pulsationssignalen zu befreien, die von Brennkammer-Pulsationen herrühren, ist es vorteilhaft, die Druck Messsignal durch eine Vorrichtung 20 zur Unterdrückung von Pulsationssignalen (in Fig. 1 gestrichelt eingezeichnet) zur Maschinensteuerung 19 zu leiten. Eine solche Vorrichtung 20 könnte zur Mittelwertbildung ausgebildet sein, wobei die Mittelungsdauer mindestens etwa das 5- bis 10-fache der Positionsfrequenz beträgt. Die Vorrichtung 20 kann aber auch ein entsprechend angepasstes Filter enthalten.

Die Lösungsidee der vorliegenden Erfindung weist nun die folgenden charakteristischen Eigenschaften auf:

1. Für die Regelung der Heissgastemperatur wird ein Temperatur-Messsignal nicht benötigt. Die Heissgastemperatur kann ausschliesslich aus Druckmessungen berechnet werden. Da sich der Druck in der Maschine mit Schallgeschwindigkeit ändert, gibt es praktisch keine Verzögerungszeit für das Eingangs-Messsignal der Maschinensteuerung 19. Auf diese Weise können potentiell gefährliche nicht-stationäre Überschwingungen der Heissgastemperatur vermieden werden.

2. Im Unterschied zu bisherigen Lösungen, bei denen teilweise komplexe mathematische Näherungen (zum Beispiel Polynome) verwendet wurden, basiert die vorgeschlagene Lösung auf einem physikalischen Gesetz mit einem breiten Anwendungsbereich in der realen Maschine, nämlich der konstanten Turbinenkapazität für eine mehrstufige Turbine.

3. Es werden nur zwei zu messende Eingangsgrössen benötigt:

   a. der Druck vor der Turbine; und
   b. eine repräsentative und geeignete Druckverlust-Messung im Hauptstrom.

Physikalische Grundlage der Erfindung ist die Turbinenkapazität. Die Turbinenkapazität, wie auch als "reduzierter Massenstrom" bezeichnet wird, ist für eine mehrstufige Turbine wie folgt definiert:

$$(1) \qquad \frac{\dot{m}\sqrt{R \cdot T}}{p} = const(T, n),$$

wobei $\dot{m}$ [kg/s] der Massenstrom ist, R[kJ/kg/K] die Gaskonstante, T[K] die Temperatur (Heissgastemperatur) und p[bar] der Druck vor der ersten Schaufelreihe der Turbine.

Die Turbinenkapazität ist konstant. Sie hängt ein wenig von der Temperatur T und die Drehgeschwindigkeit n(Hz) ab. Die Turbinenkapazität nimmt leicht mit zunehmendem T zu und nimmt auch leicht mit abnehmender Drehgeschwindigkeit zu.

Im Mittelpunkt der Erfindung steht die spezielle Anwendung der obigen Formel (1) für die transiente Steuerung der Gasturbine 10. Hierfür wird die Formel (1) unter Zuhilfenahme einiger Annahmen, die für den betrachteten Betriebsbereich der Gasturbine 10 gültig sind, umgeformt.

Die Auflösung der Formel (1) nach der Temperatur ergibt:

$$(1a) \qquad T = const(T, n)^2 \frac{p^2}{\dot{m}^2} \cdot \frac{1}{R}.$$

Δp [bar] sei nun ein repräsentativer und geeigneter Druckverlust-Messwert im Hauptstrom der Turbine (siehe Fig. 1). Die Messpositionen, zwischen denen der Druckverlust bestimmt wird, können weit gehend beliebig gewählt werden, müssen jedoch stromabwärts der Flammen in der Brennkammer 13 der Gasturbine 10 liegen. Der entsprechende Messabschnitt kann ausschliesslich in der Brennkammer 13 liegen, oder ausschliesslich im Turbinenflansch 14, oder er kann sich, wie in Fig. 1 dargestellt, in beiden Sektionen der Gasturbine 10 befinden. Die Lage des Messabschnitts hängt vom speziellen Aufbau der Gasturbine 10 ab und kann unter Berücksichtigung dieses Aufbaus optimal gewählt werden.

Für die Abhängigkeit des Massenstroms innerhalb des Druckverlust-Messabschnitts, $\dot{m}_{\Delta p}$, ergibt sich die folgende Proportionalität:

$$(2) \qquad \dot{m}_{\Delta p}{}^2 \propto \overline{\rho}_{\Delta p} \cdot \Delta p(T) \propto \frac{\overline{p}_{\Delta p}}{\overline{R}_{\Delta p} \cdot \overline{T}_{\Delta p}} \cdot \Delta p \propto \frac{\Delta p^2}{\overline{R}_{\Delta p}},$$

wobei $\overline{\rho}_{\Delta p}$[kg/m³] die mittlere Dichte bezeichnet. Unter Einsatz der idealen Gasgleichung kann diese mittlere Dichte durch den mittleren Druck $\overline{p}_{\Delta p}$[bar], die mittlere Gaskonstante $\overline{R}_{\Delta p}$[kJ/kg/K] und die mittlere Temperatur $\overline{T}_p$[K] im Druck-verlust-Messabschnitt ausgedrückt werden.

Es hat sich herausgestellt dass in der Formel (2) zumindest die Proportionalität

$$(2a) \qquad \dot{m}_{\Delta p}{}^2 \propto \frac{\Delta p^2}{\overline{R}_{\Delta p}}$$

bleibt.

Des Weiteren lassen sich noch die folgenden Proportionalitäten finden:

$$(3) \qquad \dot{m} \propto \dot{m}_{\Delta p}$$

und

$$(4) \qquad R \propto \overline{R}_{\Delta p}.$$

Setzt man nun die Formeln (2a), (3) und (4) in die Gleichung (1a) ein, erhält man die folgende Formel:

$$(5) \qquad T = const^*(T,n) \cdot \left(\frac{p}{\Delta p}\right)^2.$$

Die Abhängigkeit von der Temperatur T in dem Ausdruck *const*\*(*T,n*) kann durch Anwendung der Isentropen-gleichung eliminiert werden:

$$(6) \qquad const^*(T,n) = const^{**}(n) \cdot \left(\frac{p}{p_0}\right)^{\frac{1,31-1}{1,31}}.$$

Der Umgebungsdruck $p_{amb}$ kann in Formel (5) durch einen Term aus der Isentropengleichung,

$$(7) \qquad \left(\frac{p_{amb_0}}{p_{amb}}\right)^{\frac{1,31-1}{1,31}},$$

berücksichtigt werden. $p_0$[bar] ist der Druck vor der Turbine 15, $p_{amb0}$ der zugehörige Umgebungsdruck, beide am nominellen Punkt.

(1,31) ist der Isentropen-Koeffizient, der eine Funktion der Temperatur ist. Im Bereich der Heissgastemperaturen bekannter Gasturbinen ist der Wert 1,31. Je nach Turbine kann er aber auch höher oder niedriger sein.

Durch Einsetzen der Ausdrücke (6) und (7) in die Formel (5) erhält man die folgende Formel für die Anwendung der transienten Heissgastemperatur-Regelung:

$$(8) \quad T = const^{**}(n) \cdot \left(\frac{p}{\Delta p}\right)^2 \cdot \left(\frac{p \cdot p_{amb_0}}{p_0 \cdot p_{amb}}\right)^{\frac{1,31-1}{1,31}} = F(p, \Delta p).$$

Gemäss dieser Formel kann die Maschinensteuerung 19 aus den nahezu verzögerungsfrei aufgenommene Messgrössen p und $\Delta p$ sehr schnell die Heissgastemperatur T bestimmen und entsprechend in die Brennstoffzufuhr zur Brennkammer 13 eingreifen. Auf diese Weise kann bei transienten Betriebszuständen ein Überschwingen der Heissgastemperatur und eine damit verbundene Gefährdung der Maschine sicher vermieden werden.

Die dargestellten bevorzugten Ausführungsformen der Erfindung dienen lediglich zur Erläuterung und sind nicht einschränkend auszulegen. Beispielsweise ist die Erfindung auch für Gasturbinen mit zwei oder mehr Brennkammern und/ oder Turbinen anwendbar.

BEZUGSZEICHENLISTE

| | |
|---|---|
| 10 | Gasturbine |
| 11 | Verdichter |
| 12 | Verdichterflansch |
| 13 | Brennkammer |
| 14 | Turbinenflansch |
| 15 | Turbine (mehrstufig) |
| 16 | Kühlung |
| 17 | Achse |
| 18 | Flamme |
| 19 | Maschinensteuerung |
| 20 | Vorrichtung zur Unterdrückung von Pulsationssignalen (z.B. Mittelwertbildner oder Filter) |
| P1-P3 | Druckaufnehmer |

**Patentansprüche**

1. Verfahren zum Regeln einer Gasturbine (10), insbesondere bei transienten Betriebszuständen, welche Gasturbine (10) einen Verdichter (11) zum Verdichten von angesaugter Verbrennungsluft, eine Brennkammer (13) zum Erzeugen von Heissgas durch Verbrennen eines Brennstoffs mittels der verdichteten Verbrennungsluft, sowie eine mehrstufige Turbine (15) zum Entspannen des erzeugten Heissgases unter Arbeitsleistung umfasst, wobei die Regelung nach Massgabe der Heissgastemperatur erfolgt, welche aus mehreren anderen gemessenen Betriebsgrössen der Gasturbine (10) abgeleitet wird, **dadurch gekennzeichnet, dass** eine Ableitung der Heissgastemperatur ausschliesslich über Druckmessungen (P1, P2, P3) an verschiedenen Stellen der Gasturbine (10) gebildet wird, wobei die Druckmessungen (P1, P2, P3) im in der Brennkammer (13) erzeugten Heissgasstrom durchgeführt werden und eine Druckverlust-Messung ($\Delta p$) im Hauptstrom der Gasturbine (10) umfassen.

2. Verfahren nach Anspruch 1, **dadurch gekennzeichnet, dass** die Messpositionen (P1, P2), zwischen denen der Druckverlust ($\Delta p$) bestimmt wird, stromabwärts der in der Brennkammer (13) der Gasturbine (10) befindlichen Flammen (18) liegen.

3. Verfahren nach Anspruch 2, **dadurch gekennzeichnet, dass** die Messpositionen (P1, P2), zwischen denen der Druckverlust ($\Delta p$) bestimmt wird, ausschliesslich in der Brennkammer (13) liegen.

4. Verfahren nach Anspruch 2, **dadurch gekennzeichnet, dass** in der Gasturbine (10) am Übergang zwischen Brennkammer (13) und Turbine (15) ein Turbinenflansch (14) angeordnet ist, und dass die Messpositionen (P1, P2), zwischen denen der Druckverlust ($\Delta p$) bestimmt wird, ausschliesslich im Turbinenflansch 14 liegen.

5. Verfahren nach Anspruch 2, **dadurch gekennzeichnet, dass** in der Gasturbine (10) am Übergang zwischen Brennkammer (13) und Turbine (15) ein Turbinenflansch (14) angeordnet ist, und dass die Messpositionen (P1, P2), zwischen denen der Druckverlust ($\Delta p$) bestimmt wird, sowohl in der Brennkammer (13) als auch im Turbinenflansch (14) liegen.

6. Verfahren nach einem der Ansprüche 1-5, **dadurch gekennzeichnet, dass** zusätzlich zur Druckverlust-Messung ($\Delta p$) der Druck (p) unmittelbar vor der ersten Schaufelreihe der Turbine (15) gemessen wird.

7. Verfahren nach Anspruch 6, **dadurch gekennzeichnet, dass** die Heissgastemperatur (T) aus der Druckverlust-Messung ($\Delta p$) und der Druckmessung (p) unmittelbar vor der ersten Schaufelreihe der Turbine (15) nach Massgabe der Formel

$$T = const^{**}(n) \cdot \left( \frac{p}{\Delta p} \right)^2 \cdot \left( \frac{p \cdot p_{amb_0}}{p_0 \cdot p_{amb}} \right)^{\frac{1,31-1}{1,31}} = F(p, \Delta p)$$

abgeleitet wird, wobei n die Drehzahl, $p_{amb}$ der Umgebungsdruck und po der Druck vor der Turbine (15) und $p_{amb0}$ der zugehörige Umgebungsdruck, beide am nominellen Punkt, sind.

8. Verfahren nach einem der Ansprüche 1-7, **dadurch gekennzeichnet, dass** bei den Druckmessungen (P1, P2, P3) durch zeitliche Mittelung oder Filterung allfällige von Brennkammer-Pulsationen herrührende Pulsationssignale unterdrückt werden.

9. Gasturbine (10) zur Durchführung des Verfahrens nach einem der Ansprüche 1 - 8, welche Gasturbine (10) einen Verdichter (11) zum Verdichten von angesaugter Verbrennungsluft, eine Brennkammer (13) zum Erzeugen von Heissgas durch Verbrennen eines Brennstoffs mittels der verdichteten Verbrennungsluft, sowie eine mehrstufige Turbine (15) zum Entspannen des erzeugten Heissgases unter Arbeitsleistung umfasst, **dadurch gekennzeichnet, dass** im Bereich des in der Brennkammer (13) erzeugten Heissgasstroms in Strömungsrichtung hintereinander zwei Druckaufnehmer (P1, P2) zur Messung des Druckverlustes im Heissgasstrom angeordnet sind, welche Druckaufnehmer (P1, P2) an eine Maschinensteuerung (19) der Gasturbine (10) angeschlossen sind.

10. Gasturbine nach Anspruch 9, **dadurch gekennzeichnet, dass** die beiden Druckaufnehmer (P1, P2) im Bereich der Brennkammer (13) angeordnet sind.

11. Gasturbine nach Anspruch 9, **dadurch gekennzeichnet, dass** in der Gasturbine (10) am Übergang zwischen Brennkammer (13) und Turbine (15) ein Turbinenflansch (14) angeordnet ist, und dass wenigstens einer der Druckaufnehmer (P1, P2) im Bereich des Turbinenflansches (14) angeordnet ist.

12. Gasturbine nach Anspruch 11, **dadurch gekennzeichnet, dass** die beiden Druckaufnehmer (P1, P2) im Bereich des Turbinenflansches (14) angeordnet sind.

13. Gasturbine nach einem der Ansprüche 9-12, **dadurch gekennzeichnet, dass** ein dritter Druckaufnehmer (P3) unmittelbar vor der ersten Schaufelreihe der Turbine (15) angeordnet und an die Maschinensteuerung (19) der Gasturbine (10) angeschlossen ist.

14. Gasturbine nach einem der Ansprüche 9-13-, **dadurch gekennzeichnet, dass** die Druckaufnehmer (P1, P2 bzw. P3) über eine Vorrichtung (20) zur Unterdrückung von Pulsationssignalen an die Maschinensteuerung (19) der Gasturbine (10) angeschlossen sind.

## Claims

1. Method for controlling a gas turbine (10), in particular in transient operating states, which gas turbine (10) has a compressor (11) for compressing aspirated combustion air, a combustion chamber (13) for producing hot gas by burning a fuel by means of the compressed combustion air, and a multistage turbine (15) for expanding the produced hot gas to perform work, wherein the control takes place according to the hot gas temperature which is derived from several other measured parameters of the gas turbine (10), **characterised in that** the hot gas temperature is derived exclusively via pressure measurements (P1, P2, P3) at various points of the gas turbine (10), wherein the pressure measurements (P1, P2, P3) are performed in the hot gas flow generated in the combustion chamber (13) and include a pressure loss measurement ($\Delta p$) in the main flow of the gas turbine.

2. Method according to claim 1, characterised the measurement positions (P1, P2) between which the pressure loss

($\Delta$p) is determined lie downstream of the flames (18) present in the combustion chamber (13) of the gas turbine (10).

3. Method according to claim 2, **characterised in that** the measurement positions (P1, P2) between which the pressure loss ($\Delta$p) is determined lie exclusively in the combustion chamber (13).

4. Method according to claim 2, **characterised in that** a turbine flange (14) is arranged in the gas turbine (10) at the transition between the combustion chamber (13) and the turbine (15), and that the measurement positions (P1, P2) between which the pressure loss ($\Delta$p) is determined lie exclusively in the turbine flange (14).

5. Method according to claim 2, **characterised in that** a turbine flange (14) is arranged in the gas turbine (10) at the transition between the combustion chamber (13) and the turbine (15), and that the measurement positions (P1, P2) between which the pressure loss ($\Delta$p) is determined lie both in the combustion chamber (13) and also in the turbine flange (14).

6. Method according to any of claims 1 - 5, **characterised in that** in addition to the pressure loss measurement ($\Delta$p), the pressure (p) is measured directly in front of the first blade row of the turbine (15).

7. Method according to claim 6, **characterised in that** the hot gas temperature (T) is derived from the pressure loss measurement ($\Delta$p) and the pressure measurement (p) directly in front of the first blade row of the turbine (15) in accordance with the formula:

$$T = const^{**}(n) \cdot \left( \frac{p}{\Delta p} \right)^2 \cdot \left( \frac{p \cdot p_{amb_0}}{p_0 \cdot p_{amb}} \right)^{\frac{1,31-1}{1,31}} = F(p, \Delta p)$$

wherein n is the rotation speed, $p_{amb}$ the ambient pressure, and po the pressure before the turbine (15) and $p_{amb0}$ the associated ambient pressure, both at the nominal point.

8. Method according to any of claims 1-7, **characterised in that** in the pressure measurements (P1, P2, P3), any pulsation signals provoked by combustion chamber pulsations are suppressed by temporal averaging or filtering.

9. Gas turbine (10) for performance of the method according to any of claims 1 - 8, which gas turbine (10) has a compressor (11) for compressing aspirated combustion air, a combustion chamber (13) for producing hot gas by burning a fuel by means of the compressed combustion air, and a multistage turbine (15) for expanding the produced hot gas to perform work, **characterised in that** two pressure transducers (P1, P2) for measuring the pressure loss in the hot gas flow are arranged successively in the flow direction in the region of the hot gas flow produced in the combustion chamber (13), which pressure transducers (P1, P2) are connected to a machine control system (19) of the gas turbine (10).

10. Gas turbine according to claim 9, **characterised in that** the two pressure transducers (P1, P2) are arranged in the region of the combustion chamber (13).

11. Gas turbine according to claim 9, **characterised in that** a turbine flange (14) is arranged in the gas turbine (10) at the transition between the combustion chamber (13) and the turbine (15), and that at least one of the pressure transducers (P1, P2) is arranged in the region of the turbine flange (14).

12. Gas turbine according to claim 11, **characterised in that** both pressure transducers (P1, P2) are arranged in the region of the turbine flange (14).

13. Gas turbine according to any of claims 9 - 12, **characterised in that** a third pressure transducer (P3) is arranged immediately in front of the first blade row of the turbine (15) and is connected to the machine control system (19) of the gas turbine (10).

14. Gas turbine according to any of claims 9 - 13, **characterised in that** the pressure transducers (P1, P2 or P3) are connected to the machine control system (19) of the gas turbine (10) via a device (20) for suppressing pulsation signals.

**Revendications**

1. Procédé pour la régulation d'une turbine à gaz (10), plus particulièrement dans le cas d'états de fonctionnement transitoires, cette turbine à gaz (10) comprenant un compresseur (11) pour la compression d'un air de combustion aspiré, une chambre de combustion (13) pour la production de gaz chaud par combustion d'un carburant au moyen de l'air de combustion comprimé, ainsi qu'une turbine multi-étage (15) pour la détente du gaz chaud généré à la puissance de travail, la régulation ayant lieu en fonction de la température du gaz chaud, qui est déduite de plusieurs autres grandeurs de mesure mesurées de la turbine à gaz (10), **caractérisé en ce qu'**une détermination de la température du gaz a lieu exclusivement par des mesures de pression (P1, P2, P3) à différents endroits de la turbine à gaz (10), les mesures de pression (P1, P2, P3) étant effectuées dans le flux de gaz chaud généré dans la chambre de combustion (13) et comprennent une mesure des pertes de charge ($\Delta$p) dans le flux principal de la turbine à gaz (10).

2. Procédé selon la revendication 1, **caractérisé en ce que** les positions des mesures (P1, P2), entre lesquelles la perte de charge ($\Delta$p) est déterminée, se trouvent en aval des flammes (18) se trouvant dans la chambre de combustion (13) de la turbine à gaz (10).

3. Procédé selon la revendication 2, **caractérisé en ce que** les positions des mesures (P1, P2), entre lesquelles la perte de charge ($\Delta$p) est déterminée, se trouvent exclusivement dans la chambre de combustion (13).

4. Procédé selon la revendication 2, **caractérisé en ce que**, dans la turbine à gaz (10), au niveau de la transition entre la chambre de combustion (13) et la turbine (15), se trouve une bride de turbine (14) et **en ce que** les positions des mesures (P1, P2), entre lesquelles la perte de charge ($\Delta$p) est déterminée, se trouvent exclusivement dans la bride de turbine (14).

5. Procédé selon la revendication 2, **caractérisé en ce que**, dans la turbine à gaz (10), au niveau de la transition entre la chambre de combustion (13) et la turbine (15), se trouve une bride de turbine (14) et **en ce que** les positions des mesures (P1, P2), entre lesquelles la perte de charge ($\Delta$p) est déterminée, se trouvent aussi bien dans la chambre de combustion (13) que dans la bride de turbine (14).

6. Procédé selon l'une des revendications 1 à 5, **caractérisé en ce que**, en plus de la mesure de perte de charge ($\Delta$p), la pression (p) est mesurée immédiatement avant la première rangée de pales de la turbine (15).

7. Procédé selon la revendication 6, **caractérisé en ce que** la température du gaz chaud (T) est déduite de la mesure de perte de charge ($\Delta$p) et de la mesure de pression (p) immédiatement avant la première rangée de pales de la turbine (15) en fonction de la formule :

$$T = const^{**}(n) \cdot \left(\frac{p}{\Delta p}\right)^2 \cdot \left(\frac{p \cdot p_{amb_0}}{p_0 \cdot p_{amb}}\right)^{\frac{1.31-1}{1.31}} = F(p, \Delta p)$$

n étant la vitesse de rotation, $p_{amb}$, la pression ambiante et $p_0$ la pression avant la turbine (15) et $p_{amb0}$ la pression ambiante correspondante, les deux au point nominal.

8. Procédé selon l'une des revendications 1 à 7, **caractérisé en ce que**, pour les mesures de pression (P1, P2, P3), les signaux de pulsation éventuels provenant d'une moyenne ou d'un filtrage en fonction du temps des pulsations de la chambre de combustion sont supprimés.

9. Turbine à gaz (10) pour l'exécution du procédé selon l'une des revendications 1 à 8, cette turbine à gaz (10) comprenant un compresseur (11) pour la compression d'un air de combustion aspiré, une chambre de combustion (13) pour la production de gaz chaud par combustion d'un carburant au moyen de l'air de combustion comprimé, ainsi qu'une turbine multi-étage (15) pour la détente du gaz chaud généré à la puissance de travail, **caractérisée en ce que**, au niveau du flux de gaz chaud généré dans la chambre de combustion (13), se trouvent deux capteurs de pression (P1, P2) disposés l'un derrière l'autre dans la direction d'écoulement pour la mesure de la perte de charge dans le flux de gaz chaud, ces capteurs de pression (P1, P2) étant connectés à une commande de machine (19) de la turbine à gaz (10).

**10.** Turbine à gaz selon la revendication 9, **caractérisée en ce que** les deux capteurs de pression (P1, P2) sont disposés au niveau de la chambre de combustion (13).

**11.** Turbine à gaz selon la revendication 9, **caractérisée en ce que**, dans la turbine à gaz (10), au niveau de la transition entre la chambre de combustion (13) et la turbine (15), se trouve une bride de turbine (14) et **en ce qu'**au moins un des capteurs de pression (P1, P2) est disposé au niveau de la bride de turbine (14).

**12.** Turbine à gaz selon la revendication 11, **caractérisée en ce que** les deux capteurs de pression (P1, P2) sont disposés au niveau de la bride de turbine (14).

**13.** Turbine à gaz selon l'une des revendications 9 à 12, **caractérisée en ce qu'**un troisième capteur de pression (P3) est disposé immédiatement avant la première rangée de pales de la turbine (15) et est connecté à la commande de machine (19) de la turbine à gaz (10).

**14.** Turbine à gaz selon l'une des revendications 9 à 13, **caractérisée en ce que** les capteurs de pression (P1, P2 ou P3) sont connectés par l'intermédiaire d'un dispositif (20) pour la suppression des signaux de pulsation, à la commande de machine (19) de la turbine à gaz (10).

Fig.1

EP 2 447 511 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 890888 A1
- WO 2007045528 A

- EP 0890888 A
- EP 1602904 A